# FASCICULE DE BREVET EUROPEEN

(11) **EP 1 341 087 B1**
(45) Date de publication et mention de la délivrance du brevet: **25.01.2012**
(21) Numéro de dépôt: 03290212.4
(22) Date de dépôt: 28.01.2003
(51) Int. Cl.: G06F 11/34

(54) **Procédé et système de gestion d'un journal personnel d'évènements**
LogVerfahren und Vorrichtung zur Verwaltung eines persönlichen Ereignisslogbuches
Method and system for the management of a personal event journal

(30) Priorité: 07.02.2002 FR 0201519
(43) Date de publication de la demande: 03.09.2003
(73) Titulaire: Bull SAS, 78340 Les Clayes-sous-Bois (FR)
(72) Inventeur: Bouchet, Alain, 95840 Villiers-Adam (FR)
(74) Mandataire: Fréchède, Michel

(56) Documents cités:
- US-A- 5 345 590
- US-A- 6 047 353

## Description

L'invention concerne un procédé de gestion d'un journal personnel d'évènements propre à une activité d'exploitation contenant des évènements enregistrés par cette activité d'exploitation lorsqu'elle est exécutée sur un périmètre de ressources informatiques matérielles, chaque activité d'exploitation contenant au moins un système d'exploitation apte à gérer les ressources informatiques du périmètre sur lequel elle est destinée à être exécutée, ce procédé comportant :
- lors de la sauvegarde d'un événement par une activité, une étape (152) d'enregistrement, dans un journal commun d'événements, de l'événement associé à un identificateur de l'activité qui sauvegarde l'événement
- avant la consultation par une activité de son journal personnel d'évènements, une étape de reconstruction du journal personnel d'évènements à partir du journal commun d'évènements (72), cette étape de reconstruction comportant une opération (164) de sélection dans le journal commun d'événements (72) des seuls évènements associés à l'identificateur de cette activité pour les inclure dans le journal personnel d'événements reconstruit pour cette activité,

Un tel procédé est par exemple connu du document US 6047 353 A. Se pose alors le problème de la mise en oeuvre de tels procédés pour le cas des plate-formes informatiques multicellulaires comportant plusieurs périmètres de ressources informatiques distincts activables successivement ou simultanément sur la plate-forme.

A l'heure actuelle, un des axes d'évolution des matériels et/ou des systèmes informatiques concerne la mise en oeuvre d'une flexibilité maximale des ressources informatiques configurables, au bénéfice d'un utilisateur, disposant localement de ressources informatiques notablement plus réduites.

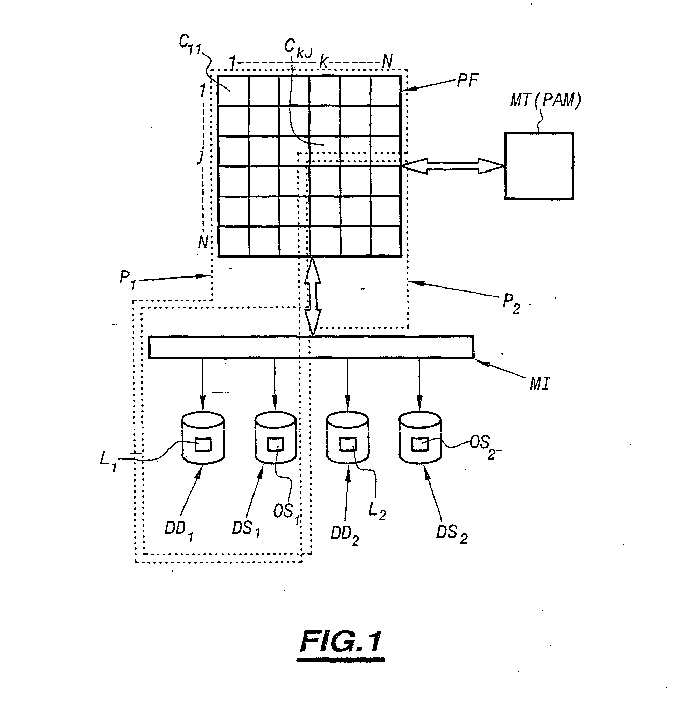

Dans les systèmes informatiques configurables ou reconfigurables actuel, ainsi que représentés dans la figure 1, on utilise une plate-forme multicellulaire PF de ressources informatiques. La plate-forme multicellulaire PF est formée de plusieurs cellules de calcul Cₖⱼ comportant au moins une unité centrale de traitement et des mémoires de travail locales dont une mémoire non volatile dite mémoire NVRAM. Les mémoires de travail de chaque cellules sont aptes notamment à contenir un journal d'évènements dans lequel des évènements survenus lors du fonctionnement de la cellule ou d'un groupe de cellules sont enregistrés. Ces évènements peuvent être, par exemple, des incidents matériels ou des alarmes survenus lors du fonctionnement de la cellule ou encore des évènements enregistrés par un système d'exploitation, lors de son exécution sur cette cellule. Ce journal d'évènements est également connu sous l'acronyme SEL (System Event Log).

Dans les systèmes configurables ou reconfigurables tels que représentés à la figure 1, il existe des ressources communes à l'ensemble des cellules de la plate-forme. Ces ressources communes comportent des mémoires de masse dont notamment des disques système et des disques de données. Les disques de données comportent des logiciels d'application ou applicatifs composés de programmes informatiques à exécuter et/ou de données à traiter. Les disques système comportent chacun un système d'exploitation apte à gérer les ressources matérielles d'une cellule ou d'un

groupe de cellules. En particulier, chaque système d'exploitation est propre à gérer le journal d'évènements de la cellule ou du groupe de cellules sur lequel il est exécuté. A titre d'exemple, sur la figure 1, les ressources communes comportent un disque de données DD₁ contenant un logiciel d'application L₁, un disque système DS₁ contenant un système d'exploitation OS₁, un disque de données DD₂ contenant un logiciel d'application L₂ et un disque système DS₂ contenant un système d'exploitation OS₂.

Dans le contexte des systèmes configurables ou reconfigurables, le terme "activité d'exploitation" désigne l'ensemble des moyens logiciels nécessaires pour mettre en oeuvre une fonction qu'un utilisateur du système veut réaliser. Des exemples de telles fonctions sont par exemple l'établissement de feuilles de paie ou la génération de listes de clients à contacter. Une activité comporte donc au moins un système d'exploitation apte à gérer les ressources informatiques matérielles de la plate-forme. La fonction souhaitée par l'utilisateur n'étant généralement pas remplie par le système d'exploitation à lui seul, une activité d'exploitation comporte communément en plus un ou plusieurs logiciels d'application destinés à être exécutés sur le système d'exploitation pour réaliser ia ou ies fonctions souhaitées par l'utilisateur. Ici, une activité A₁ comporte le logiciel L₁ et le système d'exploitation OS₁.

Pour assurer une flexibilité maximale de ces systèmes, les ressources communes sont raccordées à la plate-forme PF par des moyens adressables d'interconnexion MI conformément à une architecture SAN (Storage Area Network). Ces moyens d'interconnexion MI sont destinés à permettre l'accès aux ressources communes à partir de n'importe quelle cellule ou groupe de cellules configurés sur la plate-forme PF. Ainsi, un disque de données peut être accédé à partir d'une cellule Cₖⱼ dans une configuration donnée de la plate-forme PF, puis ultérieurement par une cellule Cₖⱼ₊₁ dans le cadre d'une configuration différente de la plate-forme. De tels moyens d'interconnexion MI sont donc aptes à permettre à l'ensemble des cellules de la plate-forme d'accéder aux ressources communes sans qu'il soit pour cela nécessaire d'effectuer une quelconque opération de recâblage.

Finalement, les systèmes informatiques configurables ou reconfigurables comportent également un outil d'administration MT permettant à un utilisateur de regrouper les ressources informatiques matérielles en des périmètres de ressources informatiques Pᵢ destinés à exécuter des activités d'exploitation Aᵢ. Chaque périmètre Pᵢ est formé par un groupe de cellules Cₖⱼ et d'une partie des ressources communes telles qu'un disque de données et au moins un disque système. Il est possible dans ces systèmes de définir plusieurs périmètres Pᵢ. Par exemple, sur la figure 1, deux périmètres P₁ et P₂ destinés tous les deux à exécuter l'activité A₁ ont été configurés. Le périmètre P₁, délimité par une ligne en pointillés, comporte un premier groupe de cellules, le disque de données DD₁ et le disque système DS₁. Le périmètre P₂, délimité par une ligne en traits mixtes, comporte un second groupe de cellules, distinct du premier groupe de cellules, le disque de données DD₁ et le disque système DS₁.

Lorsque deux périmètres tels que les périmètres P₁ et P₂ de la figure 1 partagent des ressources matérielles communes, tel qu'un même disque système, ici DS₁, ils doivent être configurés successivement sur la même plate-forme. Dans le cas contraire, ils peuvent être configurés simultanément sur la plate-forme PF.

De tels systèmes correspondent à des systèmes ou machines désignées habituellement sous le terme de machines à partition. Ils permettent normalement d'installer et d'exécuter simultanément ou successivement des activités d'exploitation Aᵢ différentes dans différents périmètres de la plate-forme. Toutefois, ces systèmes ne permettent pas actuellement à un utilisateur de redémarrer la même activité dans un périmètre différent de celui dans lequel elle était initialement exécutée. Ainsi, par exemple, si l'utilisateur souhaite redémarrer l'activité A₁, non pas dans le périmètre P₁, mais dans le périmètre P₂, les informations enregistrées dans le journal d'évènements par l'activité A₁, lors de son exécution sur le périmètre P₁, sont perdues. En effet, le journal d'évènements du périmètre P₁ est enregistré dans les mémoires de travail locales de ce périmètre P₁, et n'est pas accessible à partir du périmètre P₂. Cette perte d'informations, lors du transfert d'une activité d'un périmètre d'origine vers un périmètre de destination, peut conduire à un dysfonctionnement de cette activité lorsqu'elle est exécutée dans son nouveau périmètre.

L'invention vise à remédier à cet inconvénient en proposant un procédé de gestion d'un journal d'évènements d'un périmètre apte à permettre le redémarrage d'une même activité d'exploitation sur un périmètre différent de celui sur lequel elle était exécutée initialement.

L'invention a donc pour objet un procédé, un système et une mémoire conforment aux revendications.

L'invention sera mieux comprise à la lecture de la description qui va suivre, donnée uniquement à titre d'exemple et faite en se référant aux dessins, sur lesquels :
- la figure 1 est une illustration schématique d'une plate-torme multicellulaire connue,
- la figure 2 est une illustration schématique de l'architecture matérielle d'un système conforme à l'invention,
- la figure 3 est un exemple d'un journal commun d'événements mis en oeuvre dans le système de la figure 2 ; et
- la figure 4 est un organigramme d'un procédé de gestion d'un journal personnel d'événements conforme à l'invention.

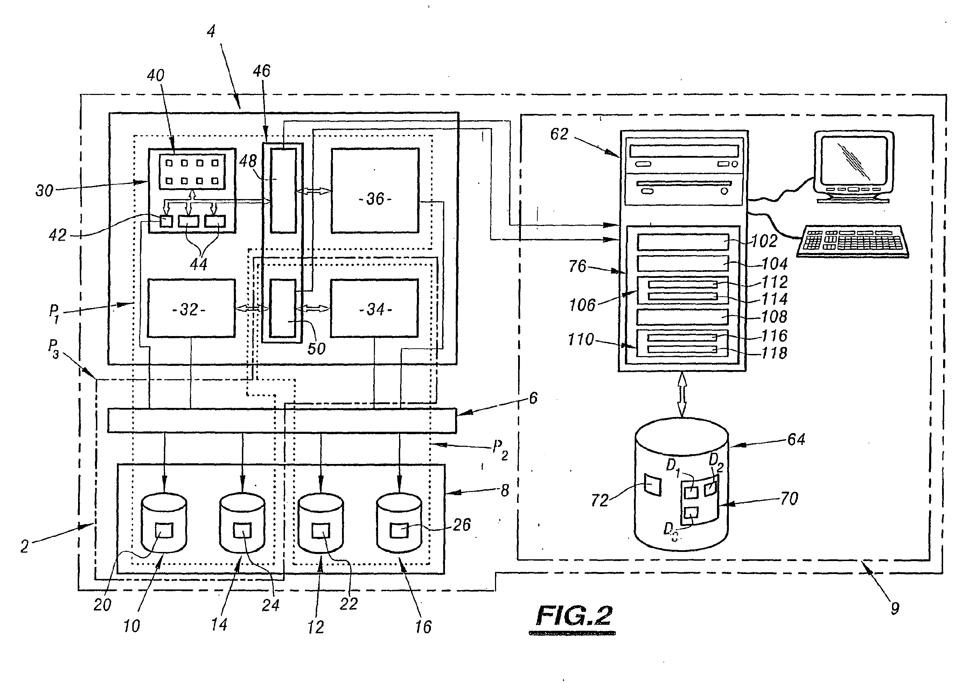

La figure 2 représente un système 2 configurable de ressources informatiques comportant une plate-forme multicellulaire 4 raccordée par l'intermédiaire de moyens 6 d'interconnexion à des ressources informatiques communes 8. La plate-forme 4 est également raccordée à un outil d'administration 9 de cette plate-forme 4.

Ici, à titre d'exemple, les ressources informatiques communes comportent uniquement des mémoires de masse. Ces mémoires de masse se composent ici de deux disques de données 10 et 12 et de deux disques système 14 et 16. Les disques de données 10 et 12 sont destinés à contenir des logiciels d'application ainsi que des données à traiter. Ici, le disque de données 10 contient un logiciel d'application 20 et le disque de données 12 contient un logiciel d'application 22. Ces disques de données 10, 12 comportent également des données à traiter. Les logiciels 20, 22 sont par exemple des logiciels de gestion de bases de données ou des logiciels d'administration de ressources matérielles.

Ici, les disques système 14 et 16 comportent respectivement un système d'exploitation 24 et un système d'exploitation 26. Ces systèmes d'exploitation 24 et 26 sont aptes à gérer les ressources informatiques matérielles de la plate-forme 4. Ainsi, chaque système d'exploitation offre des fonctionnalités de gestion d'un journal d'évènements à l'aide d'un jeu d'instructions de contrôle du journal d'évènements. Ces fonctionnalités sont soit mises en oeuvre à l'initiative d'un logiciel exécuté sur ce système d'exploitation, soit mises en oeuvre à l'initiative du système d'exploitation lui-même. Ici, le jeu d'instructions utilisé est un jeu d'instructions standard conforme aux spécifications de l'interface standard IPMI (Intelligent Platform Management Initiative) définies par INTEL. Cette spécification définit à la fois l'interface matérielle dont doit être équipée la plate-forme 4, c'est-à-dire par exemple des registres de stockage d'informations, ainsi que l'interface logicielle, c'est-à-dire par exemple les pilotes de périphériques ou "drivers" dont le système d'exploitation doit être muni. Ce jeu d'instructions comporte notamment une instruction pour consulter le journal d'évènements, une instruction pour sauvegarder un nouvel événement dans le journal d'évènements et une instruction pour effacer le journal d'évènements.

A titre d'exemple, une première activité d'exploitation A₁ est réalisée lorsque le logiciel 20 est exécuté sur le système d'exploitation 24. Cette activité A₁ comporte donc le logiciel 20 et le système d'exploitation 24.

La plate-forme multicellulaire 4 est divisée en plusieurs cellules de calcul. Ici, la plate-forme 4 comporte quatre cellules 30, 32, 34 et 36 de calcul identiques. Ainsi, seule la cellule 30 sera décrite en détail.

La cellule 30 est propre à exécuter, de façon autonome ou en coopération avec d'autres cellules, les activités d'exploitation enregistrées dans les ressources communes. Pour cela, cette cellule ou ce groupe de cellules est géré par le système d'exploitation de l'activité, enregistré dans les ressources communes.

La cellule 30 comporte, en outre, une unité centrale de traitement 40 raccordée par l'intermédiaire de bus de données et d'adresses à une carte d'entrée/sortie 42 et à des mémoires 44 de travail locales. Le bus de données et d'adresses est également raccordé à un ensemble 46 de cartes d'interface avec l'outil d'administration 9 de la plate-forme 4.

L'unité centrale de traitement 40 est destinée à exécuter des opérations de calcul. Elle comporte à cet effet, dans le mode de réalisation décrit ici, huit microprocesseurs de 64 bits aptes à exécuter, en parallèle et simultanément, ces opérations de calcul.

La carte d'entrée/sortie 42 est destinée à assurer les échanges d'informations entre les ressources communes 8 et la cellule 30.

Les mémoires 44 de travail locales comportent un identificateur unique de la cellule. Par exemple, ici, cet identificateur est un numéro d'ordre permettant de distinguer cette cellule 30 des autres cellules de la plate-forme 4. Les identificateurs de chacune des cellules 30, 32, 34 et 36 seront respectivement notés ici C₁, C₂, C₃ et C₄.

L'ensemble 46 de cartes d'interface comporte ici deux cartes d'interface 48 et 50. La carte 48 est raccordée aux cellules 30 et 36, tandis que la carte 50 est raccordée aux cellules 32 et 34. Ces cartes 48, 50 sont raccordées à l'outil d'administration 9. Elles sont identiques l'une à l'autre et seule la carte 48 sera décrite ici.

La carte 48 est apte à gérer les ressources matérielles des cellules 30 et 36. Par exemple, cette carte est propre à détecter directement des erreurs de fonctionnement des composants matériels formant ces cellules 30, 36 indépendamment du système d'exploitation exécuté sur celles-ci. Ici, cette carte est adaptée pour transmettre à l'outil d'administration 9 des messages contenant chacun un événement à enregistrer dans un journal d'évènements. Ces évènements concernent les ressources matérielles de la cellule 30 ou 36. Ils sont transmis associés avec l'identificateur de la cellule. Un événement est par exemple une erreur de fonctionnement ou un incident technique survenu sur un composant de la cellule 30 ou 36.

Ces cartes sont également aptes à intercepter les accès du système d'exploitation aux ressources matérielles des cellules. Ces cartes comportent, pour chaque cellule, une interface matérielle IPMI conforme aux spécifications de l'interface IPMI (Intelligent Platform Management Initiative), de manière à ce que les instructions de gestion du journal d'évènements de chaque cellule générée par le système d'exploitation exécuté soient transmises à cette interface matérielle IPMI. Ici, les cartes 48, 50 sont propres à retransmettre immédiatement à l'outil d'administration 9 toute instruction de gestion d'un journal d'évènements interceptée par l'intermédiaire de cette interface IPMI. Ces instructions sont transmises à l'outil d'administration 9 associées avec un identificateur unique permettant d'identifier l'activité ayant émis cette instruction.

Les moyens d'interconnexion 6 sont aptes à raccorder l'une quelconque des cellules de la plate-forme 4 à l'un quelconque des disques 10, 12, 14 et 16. Ainsi, grâce aux moyens d'interconnexion 6, aucune opération de recâblage n'est nécessaire pour raccorder l'un quelconque des disques à l'une quelconque des cellules de la plate-forme 4. Ces moyens d'interconnexion sont par exemple un réseau dédié au stockage d'informations conforme à l'architecture SAN (Storage Area Network) et réalisés à partir de produits connus sous les termes de "Switchs Fiber Channel" et commercialisés, par exemple, par la société Brocade Communications Systems, Inc., 1745 Technology Drive, San Jose, CA 95110, U.S.A. et portant les références SW 3800 ou SW 2040 chez ce fournisseur. L'outil d'administration 9 est apte à gérer la configuration de la plate-forme 4. Il est par exemple réalisé à partir d'un calculateur 62 distinct de la plate-forme 4, équipé d'un écran, d'un clavier et associé à une mémoire 64.

La mémoire 64 contient une liste de domaines 70 et un journal commun d'évènements 72.

La liste 70 contient la définition de plusieurs domaines logiques susceptibles d'être activés sur la plate-forme 4. Un domaine logique regroupe d'une part un fichier d'identité et, d'autre part, un fichier de définition d'un périmètre matériel de ressources informatiques. Le fichier d'identité comporte un identificateur unique d'une activité d'exploitation à exécuter et des attributs de sauvegarde du contexte d'exécution de cette activité. En particulier, ces attributs de sauvegarde sont destinés à contenir l'ensemble des paramètres de configuration nécessaires à l'exécution du système d'exploitation de l'activité de manière à ce que ce système d'exploitation puisse être exécuté avec les mêmes paramètres de configuration sur n'importe quel périmètre. L'indépendance du système d'exploitation vis-à-vis du périmètre de ressources matérielles sur lequel il est ou sera exécuté est ainsi obtenue. Parmi ces attributs de sauvegarde, l'un d'eux est destiné à mémoriser des paramètres de gestion d'un journal personnel d'évènements propre à l'activité. Cet attribut de sauvegarde est par exemple apte à mémoriser l'instant auquel l'activité a émis sa dernière instruction d'effacement de son journal personnel d'évènements. Le fichier d'identité comporte également des informations pour indiquer quel est le système d'exploitation à activer et quel est éventuellement le ou les logiciels d'application à exécuter pour réaliser la fonction souhaitée par l'utilisateur.

Le fichier de définition d'un périmètre contient un identificateur unique de ce périmètre et la définition des ressources informatiques matérielles destinées à être mises en oeuvre pour exécuter l'activité d'exploitation correspondant à l'identificateur d'activité enregistré dans le fichier d'identité de ce domaine. La définition d'un périmètre comporte à cet effet un ou plusieurs identificateurs de cellules de la plate-forme 4, au moins une référence au disque système contenant le système d'exploitation à exécuter et, ici, une ou plusieurs références à des disques de données contenant le ou les logiciels d'application à exécuter et/ou les données à traiter. A titre d'exemple, la liste 70 comporte ici trois domaines notés D₁, D₂ et D₃. Le domaine D₁ comprend la définition d'un périmètre P₁, et un fichier d'identité Id₁. Le périmètre P₁ défini dans cet exemple comprend les cellules 30, 32 et 36 de la plate-forme 4, ainsi que le disque de données 10 et le disque système 14. Le fichier d'identité Id₁ comprend quant à lui un identificateur de l'activité A₁, et des identificateurs du logiciel d'application 20 et du système d'exploitation 24. Le domaine D₂ comprend un fichier de définition d'un périmètre P₂ et un fichier d'identité Id₂. Le périmètre P₂ défini dans cet exemple comprend la cellule 34, le disque de données 12 et le disque système 16. Le fichier d'identité Id₂ contient quant à lui un identificateur d'activité A₂ et des identificateurs du logiciel d'application 22 et du système d'exploitation 26. Le domaine D₃ comprend un fichier de définition d'un périmètre P₃ et le fichier d'identité Id₁. Le périmètre P₃ comprend la cellule 34, le disque de données 10 et le disque système 14.

Les périmètres P₁ et P₂ sont représentés schématiquement en lignes pointillées sur la figure 1. Le périmètre P₃ est représenté en traits discontinus.

Dans le cas où un périmètre, tel que le périmètre P₁, comportant plusieurs cellules, est activé sur la plate-forme 4, une seule des cellules est une cellule maître, tandis que les autres cellules du même périmètre sont des cellules esclaves. Ainsi, cet ensemble de cellules se comporte en réalité comme une seule unité de traitement multiprocesseur. La cellule maître est par exemple automatiquement déterminée en choisissant la cellule ayant le plus petit numéro d'ordre dans le périmètre. Dans une telle situation, seule l'interface matérielle IPMI associée à la cellule maître est utilisée, pour transmettre à l'outil d'administration 9, les évènements enregistrés par l'activité exécutée dans ce périmètre multicellulaire.

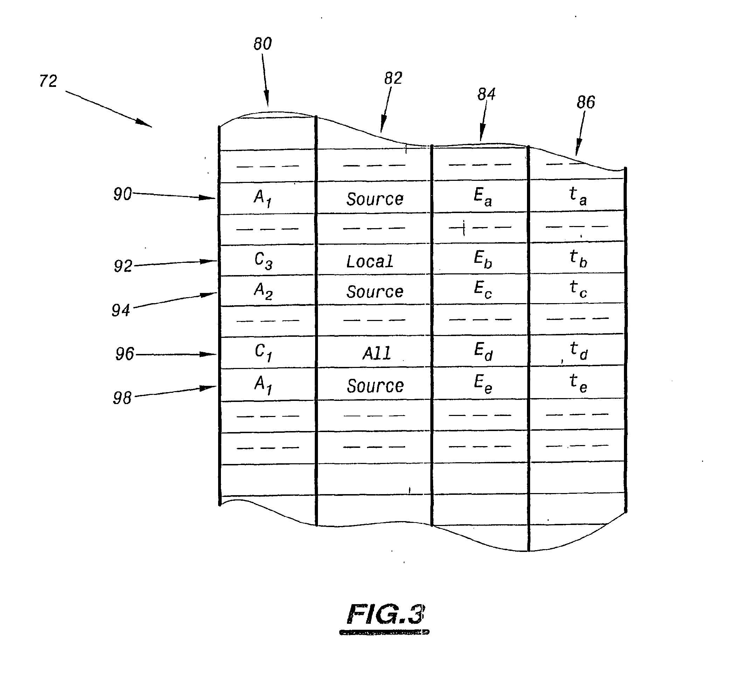

Le journal commun d'événements 72 est propre à contenir l'ensemble des évènements enregistrés par chacune des activités exécutées ou ayant été exécutées sur un périmètre configuré sur la plate-forme 4. Ici, les évènements sont reçus par l'intermédiaire de l'interface IPMI de la carte 48 ou 50. De plus, ce journal commun d'évènements 72 est également apte à contenir l'ensemble des évènements générés par les ressources matérielles des cellules de la plate-forme 4, c'est-à-dire les évènements détectés directement par les cartes 48 ou 50 et transmis directement à l'outil d'administration 9 sans passer par l'interface IPMI. A cet effet, dans le mode de réalisation décrit ici et comme illustré sur la figure 3, le journal 72 est une table d'une base de données. Cette table comporte quatre colonnes 80, 82, 84 et 86. La colonne 84 est destinée à contenir l'événement enregistré et la colonne 86 l'instant auquel cet événement a eu lieu. La colonne 80 est destinée à contenir l'identificateur de l'activité ou de la ressource matérielle ayant enregistré l'événement figurant sur la même ligne. L'identificateur de la ressource matérielle est, dans l'exemple de mode de réalisation décrit ici, l'identificateur de la cellule contenant cette ressource. Ainsi, dans la suite de cette description, on considèrera que l'élément le plus élémentaire du système 2 apte à enregistrer un événement dans le journal commun 72 est la cellule. La colonne 82 est destinée à contenir un attribut de portée indiquant quels sont les périmètres ou les activités autorisés à consulter l'événement enregistré sur la même ligne. Ici, cet attribut peut prendre trois valeurs :
- "Source", c'est-à-dire que seule l'activité ayant enregistré cet événement peut consulter l'évènement,
- "Local", c'est-à-dire que seule l'activité exécutée sur un périmètre contenant la cellule ayant enregistré cet événement peut le consulter, et
- "All", c'est-à-dire que l'événement est consultable par toute activité et quel que soit le périmètre sur lequel elle est exécutée.

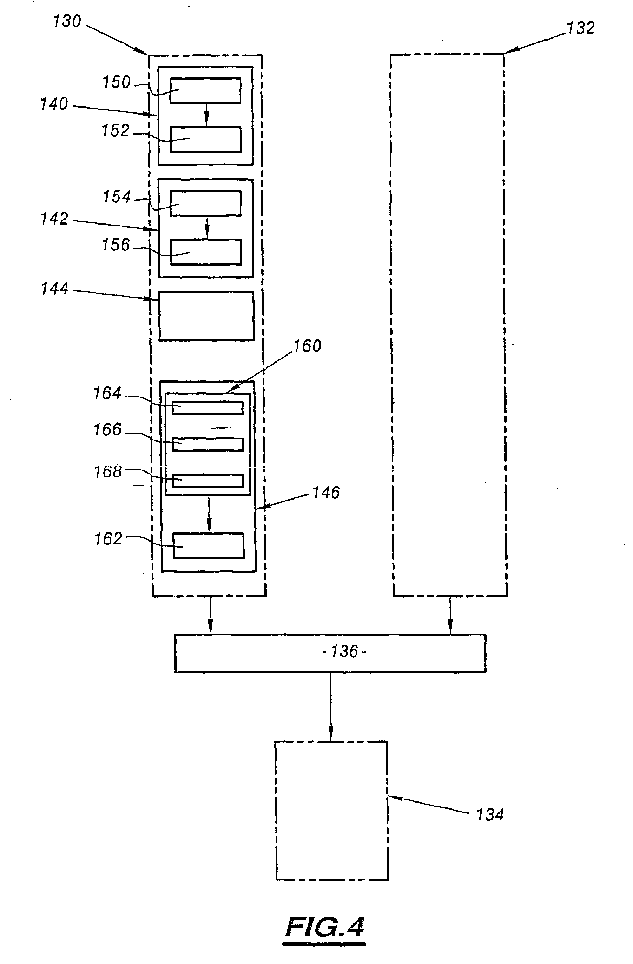

A titre d'exemple, les données de cinq lignes 90 à 98 de cette table sont représentées. Le contenu de ces lignes sera décrit plus en détail en regard de la figure 4. Les traits en pointillés dans cette table indiquent que des lignes n'ont pas été représentées.

Le calculateur 62 est équipé d'un logiciel d'administration 76. Ce logiciel est destiné, sous la commande d'un opérateur, à définir et à activer de nouveaux domaines logiques dans le système 2.

Pour cela, le logiciel 76 comporte un module 102 de définition de nouveaux domaines et un module 104 d'activation de domaines. Le module 102 est apte, sous le contrôle d'un opérateur, à définir des nouveaux domaines et à enregistrer ceux-ci dans la liste 70. Ainsi, ce module 102 est destiné à être utilisé par l'opérateur pour créer de nouveaux fichiers de définition de périmètres et des nouveaux fichiers d'identité. Ce module est également propre à permettre à l'opérateur d'associer un fichier de définition d'un périmètre et un fichier d'identité pour former un nouveau domaine logique.

Le module 104 est adapté pour permettre à l'opérateur de sélectionner dans la liste 70 un domaine à activer sur la plate-forme 4. Une telle activation d'un domaine consiste, d'une part, à configurer le périmètre tel que défini dans le domaine sélectionné sur la plate-forme 4 et, d'autre part, à lancer automatiquement, sur le périmètre configuré, l'activité correspondant au fichier d'identité contenu dans ce domaine. De plus, ce module 104 est propre à permettre à l'opérateur de désactiver un ou plusieurs domaines actuellement exécutés sur la plate-forme 4.

Le logiciel d'administration 76 est également apte à sauvegarder automatiquement, dans le journal 72, les évènements transmis par l'intermédiaire des cartes d'interface 48 et 50. A cet effet, ce logiciel comporte un module 106 de sauvegarde des évènements dans le journal 72, un module 108 d'enregistrement des paramètres de gestion d'un journal personnel d'évènements, et un module 110 de reconstruction d'un journal personnel d'évènements.

Le module 106 est apte à sauvegarder, dans le journal 72, l'ensemble des évènements transmis par les activités exécutées ou les cellules activées, à l'outil d'administration 9. Pour cela, ce module 106 comporte un sous-module 112 de détermination de la portée d'un événement reçu et un sous-module 114 d'enregistrement d'une nouvelle ligne dans le journal 72.

Le sous-module 112 est adapté pour déterminer quelle est la valeur de l'attribut de portée à enregistrer dans la colonne 82 du journal 72 pour cet événement. Ce sous-module est donc apte à déterminer, pour chaque événement à enregistrer, quels sont les activités et/ou les périmètres qui seront autorisés à consulter cet événement. Dans le mode de réalisation simplifié décrit ici, ce sous-module 112 est associé à une liste contenant tous les évènements susceptibles de se produire et qui doivent être consultables par toutes les activités et quel que soit le périmètre.

Le sous-module 114 est apte à déterminer l'identificateur de l'activité ou de la cellule ayant transmis l'événement. Il est également apte à enregistrer une nouvelle ligne dans le journal 72. Cette nouvelle ligne comporte l'événement transmis, l'identificateur de l'expéditeur, la date de l'événement et la valeur de l'attribut de portée déterminée par le sous-module 112 pour cet événement.

Le module 108 est propre à enregistrer les paramètres de gestion d'un journal personnel d'évènements propre à une activité dans le fichier d'identité associé à cette activité. Ainsi, par exemple, le module 108 est ici apte à enregistrer, dans l'attribut de sauvegarde prévu à cet effet dans le fichier d'identité, la date de la dernière instruction d'effacement du journal personnel d'évènements de cette activité.

Le module 110 est destiné à reconstruire ou restituer un journal personnel d'évènements propre à chaque activité à partir des informations enregistrées dans le journal 72. A cet effet, il comporte un sous-module 116 de sélection dans le journal 72 des évènements consultables par une activité donnée. Ces évènements sont ici les évènements associés à l'identificateur de l'activité, les évènements associés à l'identificateur d'une cellule contenue dans le périmètre sur lequel est exécutée cette activité, et tous les évènements dont l'attribut de portée a la valeur "All".

Le module 110 comporte également un sous-module 118 d'activation des paramètres de gestion du journal personnel d'évènements reconstruit par le sous-module 116. En particulier, ce sous-module 118 est apte à exécuter la dernière instruction d'effacement sauvegardée dans le fichier d'identité de l'activité correspondante.

Le procédé de fonctionnement du système 2 va maintenant être décrit à l'aide de la figure 4 et dans le cas particulier où les domaines actifs au départ sur la plate-forme 4 sont les domaines D₁ et D₂.

Le procédé de la figure 4 présente, en traits mixtes, une phase 130 d'exécution de l'activité A₁ sur le périmètre P₁, une phase 132 d'exécution de l'activité A₂ sur le périmètre P₂ et une phase 134 d'exécution de l'activité A₁ sur le périmètre P₃.

Les phases 130, 132 et 134 correspondent respectivement à l'activation et à l'exécution des domaines D₁, D₂ et D₃. Les phases 130 et 132 sont séparées de la phase 134 par une étape 136 de désactivation des domaines D₁ et D₂ puis d'activation du domaine D₃ sur la plate-forme 4. En effet, les ressources matérielles du périmètre P₃ sont communes soit au périmètre P₁, soit au périmètre P₂. Ainsi, avant la configuration de ce périmètre P₃ sur la plate-forme 4, l'ensemble des ressources matérielles nécessaires doivt être libéré, ce qui correspond ici à la désactivation des périmètres P₁ et P₂.

Les phases 132 et 134 sont similaires à la phase 130. Ainsi, seule cette phase 130 sera décrite ici en détail dans le cas particulier de l'activité A₁ et du périmètre P₁.

La phase 130 comporte une étape 140 de sauvegarde d'un événement par l'activité A₁, une étape 142 de sauvegarde d'un événement par la cellule 30 une étape 144 d'émission, par l'activité A₁, d'une instruction de modification de son journal personnel d'événements, et une étape 146 de consultation du journal personnel d'évènements par l'activité A₁.

L'étape 140 se produit lorsque l'activité A₁ transmet, à l'interface IPMI de la carte interface 48, une instruction de sauvegarde d'un nouvel événement. Cette étape 140 est donc déclenchée par la réception, par le logiciel 76 de l'outil d'administration 9, d'un événement associé à un identificateur indiquant que cet événement est produit par l'activité A₁. Lors de cette étape, l'événement ainsi reçu est enregistré dans le journal 72. Cette étape comporte principalement une sous-étape 150 de détermination de l'attribut de portée suivie d'une sous-étape 152 d'enregistrement d'une nouvelle ligne dans le journal 72.

La sous-étape 150 est réalisée par le sous-module 112 du logiciel 76. Ce sous-module 112 compare, dans un premier temps, l'événement reçu à la liste d'évènements qui lui est associée. Si l'événement reçu est identique à l'un de ceux contenus dans liste d'évènements associée, l'attribut de portée a la valeur "All". Dans le cas contraire, l'événement ayant été transmis par l'activité A₁ est automatiquement associé à un attribut de portée dont la valeur est égale à "Source".

Ensuite, lors de la sous-étape 152, le sous-module d'enregistrement 114 enregistre, dans la table formant le journal 72, une nouvelle ligne comportant l'événement reçu dans la colonne 84, l'instant d'apparition de cet événement dans la colonne 86, la valeur de l'attribut de portée dans la colonne 82 et l'identificateur de l'activité dans la colonne 80. Ici, à titre d'illustration, l'activité A₁ enregistre successivement les lignes 90 et 98 dans le journal 72 lors de la phase 130. La ligne 90 comporte l'identificateur A₁, la valeur "Source", l'événement Eₐ et l'instant tₐ respectivement dans les colonnes 80, 82, 84 et 86. La ligne 98 comporte l'identificateur A₁, la valeur "Source", l'événement Eₑ et l'instant tₑ respectivement dans les colonnes 80, 82, 84 et 86.

L'étape 142 se produit lors de la réception, par le logiciel 76, d'un événement généré directement par la cellule sans passer par l'interface IPMI ou le système d'exploitation. Ces évènements concernent, par exemple, l'état de fonctionnement d'un des microcontrôleurs de cette cellule. Lors de cette étape 142, un nouvel évènement est enregistré dans le journal 72. L'étape 142 comporte une sous-étape 154 de détermination de la valeur de l'attribut de portée associé à l'événement reçu suivie d'une sous-étape 156 d'enregistrement de l'événement dans le journal 72. La sous-étape 154 est réalisée par le sous-module 112 de détermination de la valeur de l'attribut de portée. Lors de cette sous-étape, l'événement reçu est comparé à la liste associée au sous-module 112 et, si celui-ci est identique à l'un des évènements contenus dans cette liste, l'attribut de portée a la valeur "All". Dans le cas contraire, la valeur de l'attribut de portée est fixée à "Local".

La sous-étape 156 est similaire à la sous-étape 152 à l'exception du fait que c'est l'identificateur C₁ de la cellule 30 ayant émis l'événement qui est enregistré dans la colonne 80 et non pas l'identificateur de l'activité ayant émis l'événement. A titre d'exemple, la liste associée au sous-module 112 de détermination de la portée comporte un événement E_{d}. Ici, l'événement E_{d} est supposé se produire à l'instant t_{d} dans la cellule 30. L'étape 142 est alors exécutée, ce qui conduit à enregistrer la ligne 96 dans le journal 72. Cette ligne 96 comporte l'identificateur C₁, la valeur "All", l'événement E_{d}, et l'instant t_{d} respectivement enregistrés dans les colonnes 80, 82, 84 et 86.

Lorsque l'activité A₁ émet une instruction de modification de son journal personnel, l'étape 144 d'enregistrement de l'instruction de modification dans le fichier d'identité associé à l'activité, est exécutée. Lors de cette étape 144, le module d'enregistrement 108 reçoit l'instruction de modification du journal personnel transmise par l'intermédiaire de l'interface IPMI de la carte 48. Cette instruction reçue est alors stockée dans l'attribut de sauvegarde du fichier d'identité Id₁ correspondant à l'activité A₁ ayant émis cette instruction. Ici, à titre d'illustration, l'activité A₁ émet une instruction d'effacement du journal d'évènements à l'instant t₁. Par conséquent, le module d'enregistrement 108 stocke, dans le fichier d'identité Id₁ qu'une instruction d'effacement a été émise à l'instant t₁.

Lorsque l'activité A₁ souhaite consulter son journal personnel d'évènements, une instruction de consultation est transmise par l'intermédiaire de l'interface IPMI de la carte 48 au module de reconstruction 110. Le module de reconstruction 110 exécute alors l'étape 146. Cette étape 146 comporte une sous-étape 160 de reconstruction du journal personnel d'évènements propre à l'activité A₁ suivie d'une sous-étape 162 d'exécution des instructions de modification appliquées à ce journal personnel d'évènements reconstruit.

Lors de la sous-étape 160, le sous-module de sélection 116 du module 110 sélectionne, dans le journal 72, les évènements qui seront consultables ou accessibles par l'activité A₁. Ce sous-module de sélection 116 exécute pour cela trois opérations de sélection 164, 166 et 168 successivement ou simultanément. L'opération de sélection 164 consiste à sélectionner, dans le journal 72, uniquement l'ensemble des évènements associés à l'identificateur de l'activité consultant son journal personnel d'évènements, c'est-à-dire ici l'identificateur A₁. Cette opération conduit donc à sélectionner, lors de la phase 130, uniquement les lignes 90 et 98 du journal 72. L'opération de sélection 166 consiste à sélectionner uniquement l'ensemble des évènements associés à un identificateur d'une des cellules du périmètre P₁ sur lequel est exécutée l'activité consultant son journal personnel d'évènements, c'est-à-dire ici à l'un des identificateursC₁, C₂, C₄. Cette opération conduit donc, dans l'exemple décrit ici, à sélectionner la ligne 96 du journal 72. L'opération de sélection 168 consiste, quant à elle, à sélectionner, dans le journal 72, uniquement l'ensemble des évènements associé à un identificateur différent de celui de l'activité consultant le journal personnel d'évènements et différent de celui du périmètre sur lequel est exécutée cette activité, mais associé à un attribut de portée autorisant la consultation de cet événement soit par l'activité A₁, soit à partir du périmètre P₁. Ici, aucune des lignes du journal 72 décrites jusqu'à présent ne correspond à ces trois critères. En effet, bien que l'attribut de portée enregistré dans la colonne 82 de la ligne 96 soit égal à "All", cette ligne n'est pas sélectionnée pour reconstruire le journal personnel d'évènements de l'activité A₁, car celle-ci a déjà été sélectionnée lors de l'opération 166. A l'issue de ces trois opérations de sélection 164, 166 et 168, seules les lignes sélectionnées sont rendues consultables ou accessibles par l'activité A₁. Ces lignes consultables ou accessibles par l'activité A₁ constituent son journal personnel d'évènements reconstruit.

Lors de la sous-étape 162, le module d'exécution d'instructions 118 applique, au journal personnel d'évènements reconstruit lors de la sous-étape 160, les instructions de modification de ce journal personnel d'évènements enregistrées dans le fichier d'identité Id₁ de l'activité A₁ consultant son journal personnel d'évènements. Ici, le sous-module 118 applique, au journal personnel d'évènements reconstruit pour l'activité A₁, l'instruction d'effacement enregistrée dans le fichier d'identité Id₁. L'instant t₁ étant supposé ici postérieur à l'instant tₐ et antérieur à l'instant t_{d}, l'exécution de cette instruction d'effacement conduit donc seulement à effacer la ligne 90 sélectionnée pour être incorporée dans le journal personnel d'évènements de l'activité A₁. Ainsi, à l'issue de la sous-étape 160 de sélection et de la sous-étape 162 d'exécution des instructions de modification, le journal personnel d'évènements propre à l'activité A₁ ne comporte plus que les lignes 96 et 98. Seuls ces évènements seront consultables par l'activité A₁ lorsqu'elle est exécutée sur le périmètre P₁. En d'autres termes, l'étape 146 consiste à filtrer le journal 72 pour ne sélectionner dans celui-ci que les évènements qui concernent l'activité A₁ lorsqu'elle est exécutée sur le périmètre P₁. Ainsi, la visibilité que l'activité A₁ a du journal 72 est limitée aux évènements qui la concernent et conforme aux paramètres de gestion qui ont été enregistrés dans son fichier d'identité.

Bien que les étapes 140, 142, 144 et 146 aient été décrites dans l'ordre, celles-ci peuvent se produire dans un ordre quelconque. En effet, ces étapes sont déclenchées soit par l'activité, soit par une cellule du périmètre.

Lors de la phase 132, l'activité A₂ et le périmètre P₂ exécutent des étapes similaires aux étapes 140 à 146. Ces étapes ne seront donc pas décrites ici en détail dans le cas particulier, cette fois-ci, où l'identificateur de l'activité est A₂ et où l'identificateur de la cellule est C₃. Ici, à titre d'exemple, on suppose que lors de cette phase 132, l'activité A₂ déclenche l'enregistrement de la ligne 94 dans le journal commun 72. Cette ligne 94 comporte un identificateur A₂, la valeur "Source", un événement E_{c} et un instant t_{c} respectivement enregistrés dans les colonnes 80, 82, 84 et 86. De plus, par exemple, le la cellule 34 déclenche l'enregistrement de la ligne 92 comportant l'identificateurC₃, la valeur "Local", un événement E_{b}, et un instant t_{b} respectivement enregistrés dans les colonnes 80, 82, 84 et 86.

Ainsi, à l'issue des phases 130 et 132, le journal commun comporte à la fois des évènements enregistrés par les activités A₁ et A₂, ainsi que des évènements enregistrés par les périmètres P₁ et P₂.

Lors de la phase 134, l'activité A₁ est exécutée sur le périmètre P₃. De nouveau, lors de cette phase 134, des étapes similaires aux étapes 140 à 146 sont déclenchées soit par l'activité A₁, soit parla cellule 34. Ainsi, ces étapes ne seront pas décrites une nouvelle fois.

Toutefois, pour illustrer le fonctionnement du système 2, un exemple d'exécution d'une étape de consultation du journal commun 72 est de nouveau donné ici.

Le journal 72 est supposé être dans l'état représenté à la figure 3 et le fichier d'identité Id₁ est supposé comporter l'instruction d'effacement produite à l'instant t₁. L'instant t₁ est supposé postérieur à l'instant tₐ et antérieur à l'instant t_{b}. Dans ces conditions, l'étape de reconstruction d'un journal personnel propre à l'activité A₁ conduit à sélectionner les lignes 90, 92, 96 et 98 du journal 72. En effet, les lignes 90 et 98 comportent un identificateur de l'activité A₁ dans la colonne 80, la ligne 92 comporte l'identificateur de cellule C₃ dans la colonne 80 et la ligne 96 comporte un attribut de portée égal à "All".

Ensuite, la sous-étape d'exécution des instructions de modification enregistrées dans le fichier d'identité Id₁ conduit à supprimer la ligne 90. En effet, l'événement Eₐ s'est produit à un instant antérieur à la dernière instruction d'effacement contenue dans le fichier d'identité Id₁. Ainsi, le journal personnel d'évènements comporte finalement uniquement les lignes 92, 96 et 98 et seuls ces évènements sont consultables par l'activité A₁ lorsqu'elle est exécutée sur le périmètre P₃.

Le système 2 permet donc à une activité de retrouver, lorsqu'elle est exécutée sur un périmètre courant, tous les évènements qu'elle a enregistrés, quel que soit le périmètre sur lequel elle a été exécutée précédemment. Ainsi, lorsqu'une activité est transférée d'un premier périmètre vers un second périmètre, les évènements enregistrés lors de son exécution sur le premier périmètre ne sont pas perdus. Par exemple, la ligne 98 est consultable par l'activité A₁ lorsqu'elle est exécutée sur le périmètre P₃.

Le mode de réalisation décrit ici présente l'avantage qu'un événement enregistré par une cellule est accessible à partir de tous les périmètres contenant cette cellule. Ainsi, toutes les informations concernant un périmètre sont incorporées dans le journal personnel d'évènements de l'activité exécutée sur ce périmètre.

Le système 2 enregistre, dans une mémoire accessible à partir de tous les périmètres, et exécute, lors de la consultation d'un journal personnel d'évènements, les paramètres de gestion de ce journal personnel d'évènements propre à l'activité. Ainsi, le journal personnel d'évènements restitué à chaque activité est conforme à ses paramètres de gestion, quel que soit le périmètre sur lequel elle a été ou sera exécutée. Par exemple, lors du transfert de l'activité A₁ du périmètre P₁ vers le périmètre P₃, la ligne 90, qui avait été effacée lors de son exécution sur le périmètre P₁, n'est pas de nouveau disponible lors de son exécution sur le périmètre P₃.

Si un événement enregistré par une cellule donnée est susceptible d'intéresser l'ensemble des périmètres configurés et/ou l'ensemble des activités exécutées ou susceptibles d'être exécutées, celui-ci est incorporé à tous les journaux personnels d'évènements des activités exécutées. Par exemple, bien que l'événement E_{d} (ligne 96) ait été enregistré parla cellule 30, celui-ci est consultable par l'activité A₁ lors de son exécution sur le périmètre P₃. Ainsi, à l'aide par exemple d'un attribut de portée, les évènements d'intérêt général peuvent être facilement rendus disponibles pour l'ensemble des périmètres configurés ou l'ensemble des activités exécutées.

La valeur de l'attribut de portée n'est pas limitée aux trois valeurs décrites ici. Cet attribut peut par exemple être une liste de plusieurs identificateurs d'activité et/ou de périmètre autorisés à consulter l'événement correspondant.

Le journal commun d'évènements 72 a été décrit ici sous la forme d'une table d'une base de données. En variante, le journal commun d'évènements comporte un fichier par activité actuellement exécutée ou ayant été exécutée sur la plate-forme 4. Ce fichier comporte un identificateur de l'activité, par exemple dans le nom du fichier, et l'ensemble des évènements enregistrés par cette activité. De plus, le journal commun d'évènements comporte aussi un fichier par périmètre actuellement configuré ou ayant été configuré sur la plate-forme 4. Ce fichier par périmètre comporte un identificateur du périmètre, par exemple dans le nom du fichier, et l'ensemble des évènements enregistrés par des cellules de ce périmètre. Lors de la sous-étape de reconstruction, un journal personnel d'évènements est restitué à une activité en associant les enregistrements contenus dans le fichier comportant l'identificateur de cette activité à ceux contenus dans le fichier comportant l'identificateur du périmètre sur lequel est exécutée cette activité.

En variante, l'outil d'administration 9 qui a été décrit comme étant distinct de la plate-forme 4, est intégré matériellement dans cette plate-forme informatique multicellulaire.

En variante, l'identificateur de la ressource matérielle ayant enregistré un événement dans le journal commun d'évènements 72 est l'identificateur du composant matériel contenu dans une cellule. Cette variante comporte également une table de correspondance apte à indiquer, pour chaque identificateur d'un composant matériel, quelle est la cellule qui le contient et donc quel est le périmètre qui le contient.

## Revendications

1. Procédé de gestion d'un journal personnel d'évènements propre à une activité d'exploitation contenant des évènements enregistrés par cette activité d'exploitation lorsqu'elle est exécutée sur un périmètre de ressources informatiques matérielles, chaque activité d'exploitation contenant au moins un système d'exploitation apte à gérer les ressources informatiques du périmètre sur lequel elle est destinée à être exécutée, ledit procédé comportant :
- lors de la sauvegarde d'un événement par une activité, une étape (152) d'enregistrement, dans un journal commun d'événements (72), de l'événement associé à un identificateur de l'activité qui sauvegarde l'événement
- avant la consultation par une activité de son journal personnel d'évènements, une étape (160) de reconstruction du journal personnel d'évènements à partir du journal commun d'évènements (72), cette étape de reconstruction comportant une opération (164) de sélection dans le journal commun d'évènements (72) des seuls événements associés à l'identificateur de cette activité pour les inclure dans le journal personnel d'évènements reconstruit pour cette activité
**caractérisé en ce que**, le périmètre de ressources informatiques matérielles étant configuré sur une plate-forme informatique multicellulaire (4) et la plate-forme informatique multicellulaire (4) comportant plusieurs périmètres de ressources informatiques matérielles distincts activables successivement ou simultanément sur la plate-forme (4), l'étape d'enregistrement comporte l'enregistrement d'un attribut de portée associé à cet événement indiquant quelles sont les activités autorisées à consulter cet événement et/ou les périmètres à partir desquels les activités sont autorisées à consulter cet événement : et l'étape de reconstruction comporte une opération (168) de sélection dans le journal commun d'évènements (72) des seuls évènements associés à un attribut de portée autorisant la consultation de ces évènements par l'activité exécutée et/ou à partir du périmètre sur lequel l'activité est exécutée pour les inclure dans le journal personnel d'évènements reconstruit pour cette activité.

2. Procédé selon la revendication 1, **caractérisé en ce que** les ressources informatiques matérielles des périmètres étant aptes à générer des évènements, le procédé comporte également une étape (156) d'enregistrement, dans le journal commun d'événements (72), d'un événement généré par une ressource informatique matérielle associée à un identificateur de cette ressource ayant causé cet évènement, et **en ce que** l'étape de reconstruction d'un journal personnel d'évènements propre à une activité comporte également une opération (166) de sélection dans le journal commun d'événements (72) des seuls évènements associés à un identificateur d'une des ressources informatiques matérielles contenues dans le périmètre sur lequel est exécutée cette activité pour les inclure dans le journal personnel d'évènements reconstruit pour cette activité.

3. Procédé selon l'une quelconque des revendications précédentes, **caractérisé en ce qu'**il comporte également :
- lors de l'émission par une activité d'une instruction de modification de son journal personnel d'évènements, une étape (144) d'enregistrement de cette instruction associée à un identificateur de cette activité dans un fichier accessible par l'activité à partir de tous les périmètres de la plate-forme, et
- avant la consultation par une activité de son journal personnel d'évènements, une étape d'exécution (162) de l'instruction de modification appliquée au journal personnel d'événements reconstruit pour cette activité lors de l'étape de reconstruction.

4. Système de gestion d'un journal personnel d'événements propre à une activité d'exploitation lors de son exécution, le système comportant :
- un outil d'administration (9) de périmètre de ressources informatiques matérielles - des moyens (10, 12, 14, 16) de stockage des activités d'exploitation, chaque activité d'exploitation contenant au moins un système d'exploitation apte à gérer les ressources informatiques du périmètre sur lequel elle est destinée à être exécutée,
- une mémoire (64) contenant un journal commun d'événements (72) apte à stocker les évènements enregistrés par toutes les activités d'exploitation,
- un module (114) d'enregistrement, dans le journal commun d'évènements (72), des événements générés par chaque activité d'exploitation associée à un identificateur de l'activité qui sauvegarde cet événement, et
- un module (110) de reconstruction d'un journal personnel d'évènements propre à une activité d'exploitation, à partir du journal commun d'évènements (72), ce module (110) de reconstruction comportant un sous-module (116) de sélection, dans le journal commun d'événements (72), des seuls évènements associés à l'identificateur de cette activité d'exploitation pour les inclure dans le journal personnel d'évènements reconstruit pour cette activité,**caractérisé en ce qu'**il comporte :
- une plate-forme informatique multicellulaire (4), l'outil d'administration étant apte à définir des périmètres de ressources informatiques matérielles et à activer, simultanément ou successivement, ces périmètres sur la plate-forme (4), chaque périmètre comportant une ou plusieurs cellules de calcul (30, 32, 34, 36),
- un module (106) de sauvegarde dans le journal commun d'évènements (72) d'un attribut de portée associé à chaque événement et indiquant quelles sont les activités autorisées à consulter cet événement et/ou les périmètres à partir desquels les activités sont autorisées à consulter cet événement, et **en ce que** le module (110) de reconstruction d'un journal personnel d'évènements propre à une activité comporte également un sous-module (116) de sélection dans le journal commun d'évènements (72) des seuls événements associés à un attribut de portée autorisant la consultation de ces évènements par l'activité exécutée et/ou à partir du périmètre sur lequel l'activité est exécutée pour les inclure dans le journal personnel d'évènements reconstruit pour cette activité.

5. Système selon la revendication 4, **caractérisé en ce que** le journal personnel d'évènements (72) propre à une activité d'exploitation contenant des évènements enregistrés par les ressources informatiques matérielles du périmètre sur lequel est exécutée cette activité, le système comporte également un module (114) d'enregistrement, dans le journal commun d'évènements (72), de l'événement généré par une ressource informatique matérielle du périmètre associé à un identificateur de cette ressource, et **en ce que** le module (110) de reconstruction d'un journal personnel d'événements propre à une activité comporte également un sous-module de sélection, dans le journal commun d'évènements (72), des seuls évènements associés à un identificateur d'une des ressources informatiques matérielles contenues dans le périmètre sur lequel est exécutée cette activité pour les inclure dans le journal personnel d'évènements reconstruit pour cette activité.

6. Système selon l'une quelconque des revendications 4 à 5, **caractérisé en ce qu'**il comporte également :
- un module (108) d'enregistrement d'instructions de modification du journal personnel d'évènements propre à une activité, ce module (108) d'enregistrement étant apte à enregistrer dans la mémoire (64) ces instructions de modification associées à un identificateur de l'activité les ayant générées, et
- un module (118) d'exécution des instructions de modification enregistrées par une activité dans la mémoire (64), ces instructions de modification étant appliquées au journal personnel d'évènements reconstruit pour cette activité par le module (110) de reconstruction.

7. Mémoire (64) de stockage d'informations destinée à être utilisée dans un système de gestion d'un journal personnel d'évènements selon l'une quelconque des revendications 4 à 6, **caractérisée en ce qu'**elle comporte un journal commun d'événements (72) contenant une liste d'évènements sauvegardés par plusieurs activités d'exploitation différentes, chacun de ces événements étant associé à un identificateur de l'activité qui l'a sauvegardé et un attribut de portée associé à chacun des évènements sauvegardés, cet attribut de portée indiquant quelles sont les activités autorisées à consulter cet événement et/ou les périmètres à partir desquels les activités sont autorisées à consulter cet événement.

8. Mémoire (64) de stockage d'informations selon la revendication 7, **caractérisée en ce que** le journal commun d'évènements (72) contient également une liste d'évènements sauvegardés par des ressources informatiques matérielles contenues dans des périmètres, chacun de ces événements étant associé à un identificateur de la ressource informatique matérielle qui l'a sauvegardé.

## Claims

1. Method for management of a personal event log specific to an operating activity and containing events recorded by this operating activity while it is being executed on a perimeter of computer hardware resources, each operating activity containing at least one operating system capable of managing the computer resources of the perimeter on which it is destined to be executed, said method comprising:
- while an activity is saving an event, a recording step (152) for recording the event in a common event log (72), associated with an identifier of the activity which is saving the event;
- prior to an activity consulting its personal event log, a reconstruction step (160) for reconstructing the personal event log from the common event log (72), this reconstruction step comprising a selection operation (164) for selecting from the common event log (72) only those events associated with the identifier of this activity in order to include them in the personal event log being reconstructed for this activity;
**characterised in that**, the perimeter of computer hardware resources being configured on a multiple-cell computer platform (4) and the multiple-cell computer platform (4) comprising a plurality of separate perimeters of computer hardware resources which can be activated successively or simultaneously on the platform (4), the recording step comprises the recording of a scope attribute associated with this event indicating which activities are authorised to consult this event and/or the perimeters from which the activities are authorised to consult this event; and the reconstruction step comprises a selection operation (168) for selecting from the common event log (72) only those events associated with a scope attribute authorising the consultation of these events by the activity being executed and/or from the perimeter on which the activity is being executed in order to include them in the personal event log being reconstructed for this activity.

2. Method according to claim 1, **characterised in that**, the computer hardware resources of the perimeters being capable of generating events, the method also comprises a recording step (156) for recording in the common event log (72) an event generated by a computer hardware resource associated with an identifier for this resource which caused this event, and **in that** the reconstruction step for a personal event log specific to an activity also comprises a selection operation (166) for selecting from the common event log (72) only those events associated with an identifier of one of the computer hardware resources contained in the perimeter on which this activity is being executed in order to include them in the personal event log being reconstructed for this activity.

3. Method according to any one of the preceding claims, **characterised in that** it also comprises:
- while an instruction is being issued by an activity to modify its personal event log, a recording step (144) for recording this instruction associated with an identifier of this activity in a file accessible by the activity from all the perimeters of the platform, and
- prior to an activity consulting its personal event log, an execution step (162) for executing the modification instruction applied to the personal event log being reconstructed for this activity during the reconstruction step.

4. System for management of a personal event log specific to an operating activity while it is being executed, the system comprising:
- an administration tool (9) for the perimeter of computer hardware resources,
- means (10, 12, 14, 16) for storage of the operating activities, each operating activity containing at least one operating system capable of managing the computer resources of the perimeter on which it is destined to be executed,
- a memory (64) containing a common event log (72) capable of storing the events recorded by all the operating activities,
- a recording module (114) for recording in the common event log (72) the events generated by each operating activity associated with an identifier for the activity which is saving this event, and
- a reconstruction module (110) for reconstructing a personal event log specific to an operating activity from the common event log (72), this reconstruction module (110) comprising a selection submodule (116) for selecting from the common event log (72) only those events associated with the identifier of this operating activity in order to include them in the personal event log being reconstructed for this activity, **characterised in that** it comprises:
- a multiple-cell computer platform (4), the administration tool being capable of defining perimeters of computer hardware resources and of activating these perimeters on the platform (4) simultaneously or successively, each perimeter comprising one or more calculation cells (30, 32, 34, 36),
- a saving module (106) for saving in the common event log (72) a scope attribute associated with each event and indicating which activities are authorised to consult this event and/or the perimeters from which the activities are authorised to consult this event, and **in that** the reconstruction module (110) for reconstructing a personal event log specific to an activity also comprises a selection submodule (116) for selecting from the common event log (72) only those events associated with a scope attribute authorising the consultation of these events by the activity being executed and/or from the perimeter on which the activity is being executed, in order to include them in the personal event log being reconstructed for this activity.

5. System according to claim 4, **characterised in that**, the personal event log (72) specific to an operating activity containing events recorded by the computer hardware resources of the perimeter on which this activity is being executed, the system also comprises a recording module (114) for recording in the common event log (72) the event generated by a computer hardware resource of the perimeter associated with an identifier of this resource, and **in that** the reconstruction module (110) for reconstructing a personal event log specific to an activity also comprises a selection submodule for selecting from the common event log (72) only those events associated with an identifier of one of the computer hardware resources contained in the perimeter on which this activity is being executed, in order to include them in the personal event log being reconstructed for this activity.

6. System according to any one of claims 4 to 5, **characterised in that** it also comprises:
- a recording module (108) for recording instructions to modify the personal event log specific to an activity, this recording module (108) being capable of recording these modification instructions associated with an identifier of the activity that generated them in the memory (64), and
- an execution module (118) for executing the modification instructions recorded by an activity in the memory (64), these modification instructions being applied to the personal event log being reconstructed for this activity by the reconstruction module (110).

7. Memory (64) for storage of information destined to be used in a system for management of a personal event log according to any one of claims 4 to 6, **characterised in that** it comprises a common event log (72) containing a list of events saved by a plurality of different operating activities, each of these events being associated with an identifier of the activity which saved it and a scope attribute associated with each of the saved events, this scope attribute indicating which activities are authorised to consult this event and/or the perimeters from which the activities are authorised to consult this event.

8. Memory (64) for storage of information according to claim 7, **characterised in that** the common event log (72) also contains a list of events saved by computer hardware resources contained in perimeters, each of these events being associated with an identifier of the computer hardware resource which saved it.

## Patentansprüche

1. Verfahren zur Verwaltung eines zu einer Betriebsaktivität zugehörigen persönlichen Ereignisprotokolls, das Ereignisse enthält, die von dieser Betriebsaktivität gespeichert werden, wenn diese in einem Bereich von Hardware-Datenverarbeitungsbetriebsmitteln ausgeführt wird, wobei jede Betriebsaktivität mindestens ein Betriebssystem enthält, das dazu geeignet ist, die Datenverarbeitungsbetriebsmittel des Bereichs, in dem sie ausgeführt werden soll, zu steuern, wobei das Verfahren Folgendes umfasst:
- beim Speichern eines Ereignisses durch eine Aktivität einen Schritt (152) zum Speichern des Ereignisses, das einem Identifizierer der das Ereignis speichernden Aktivität zugeordnet ist, in einem gemeinsamen Ereignisprotokoll (72),
- bevor eine Aktivität eine Abfrage ihres persönlichen Ereignisprotokolls durchführt, einen Schritt (160) zum Rekonstruieren des persönlichen Ereignisprotokolls ausgehend von dem gemeinsamen Ereignisprotokoll (72), wobei dieser Rekonstruktionsschritt einen Vorgang (164) zum Auswählen lediglich der Ereignisse in dem gemeinsamen Ereignisprotokoll (72) umfasst, die dem Identifizierer dieser Aktivität zugeordnet sind, um sie in das für diese Aktivität rekonstruierte persönliche Ereignisprotokoll aufzunehmen,
**dadurch gekennzeichnet, dass** aufgrund dessen, dass der Bereich von Hardware-Datenverarbeitungsbetriebsmitteln auf einer Mehrfachzellen-Datenverarbeitungsplattform (4) konfiguriert ist und die Mehrfachzellen-Datenverarbeitungsplattform (4) mehrere getrennte Bereiche von Hardware-Datenverarbeitungsbetriebsmitteln aufweist, die nacheinander oder gleichzeitig auf der Plattform (4) aktiviert werden können, der Speicherschritt das Speichern eines diesem Ereignis zugeordneten Umfangsattributs umfasst, das angibt, welche Aktivitäten dieses Ereignis und/oder die Bereiche abfragen dürfen, ausgehend von denen die Aktivitäten dieses Ereignis abfragen dürfen, und der Rekonstruktionsschritt einen Vorgang (168) zum Auswählen lediglich der Ereignisse in dem gemeinsamen Ereignisprotokoll (72) umfasst, die einem Umfangsattribut zugeordnet sind, das die Abfrage dieser Ereignisse durch die ausgeführte Aktivität und/oder ausgehend von dem Bereich gestattet, in dem die Aktivität ausgeführt wird, um sie in das für diese Aktivität rekonstruierte persönliche Ereignisprotokoll aufzunehmen.

2. Verfahren nach Anspruch 1, **dadurch gekennzeichnet, dass** aufgrund dessen, dass die Hardware-Datenverarbeitungsbetriebsmittel der Bereiche dazu geeignet sind, Ereignisse zu erzeugen, das Verfahren auch einen Schritt (156) umfasst, bei dem in dem gemeinsamen Ereignisprotokoll (72) ein Ereignis gespeichert wird, das von einem Hardware-Datenverarbeitungsbetriebsmittel erzeugt wurde, das einem Identifizierer dieses Betriebsmittels zugeordnet ist, das dieses Ereignis hervorgerufen hat, und der Schritt zum Rekonstruieren eines zu einer Aktivität zugehörigen persönlichen Ereignisprotokolls auch einen Vorgang (166) zum Auswählen lediglich der Ereignisse in dem gemeinsamen Ereignisprotokoll (72) umfasst, die einem Identifizierer einer der Hardware-Datenverarbeitungsbetriebsmittel zugeordnet ist, die in dem Bereich enthalten sind, in dem diese Aktivität ausgeführt wird, um sie in das für diese Aktivität rekonstruierte persönliche Ereignisprotokoll aufzunehmen.

3. Verfahren nach einem der vorhergehenden Ansprüche, **dadurch gekennzeichnet, dass** es auch Folgendes umfasst:
- wenn von einer Aktivität ein Befehl zum Ändern ihres persönlichen Ereignisprotokolls ausgegeben wird, einen Schritt (144) zum Speichern dieses einem Identifizierer dieser Aktivität zugeordneten Befehls in einer Datei, auf die die Aktivität ausgehend von allen Bereichen der Plattform zugreifen kann, und
- bevor eine Aktivität eine Abfrage ihres persönlichen Ereignisprotokolls durchführt, einen Schritt (162) zum Ausführen des Änderungsbefehls, der auf das persönliche Ereignisprotokoll angewandt wird, das bei dem Rekonstruktionsschritt für diese Aktivität rekonstruiert wurde.

4. System zur Verwaltung eines zu einer Betriebsaktivität zugehörigen persönlichen Ereignisprotokolls bei deren Ausführung, wobei das System Folgendes aufweist:
- ein Werkzeug (9) zur Steuerung eines Bereichs von Hardware-Datenverarbeitungsbetriebsmitteln, Mittel (10, 12, 14, 16) zum Speichern der Betriebsaktivitäten, wobei jede Betriebsaktivität mindestens ein Betriebssystem aufweist, das dazu geeignet ist, die Datenverarbeitungsbetriebsmittel des Bereichs zu steuern, in dem sie ausgeführt werden soll,
- einen Speicher (64) mit einem gemeinsamen Ereignisprotokoll (72), der dazu geeignet ist, die von allen Betriebsaktivitäten gespeicherten Ereignisse zu speichern,
- ein Modul (114) zum Speichern der Ereignisse in dem gemeinsamen Ereignisprotokoll (72), die von jeder Betriebsaktivität erzeugt werden, die einem Identifizierer der dieses Ereignis speichernden Aktivität zugeordnet ist,
- ein Modul (110) zum Rekonstruieren eines zu einer Betriebsaktivität zugehörigen persönlichen Ereignisprotokolls ausgehend von dem gemeinsamen Ereignisprotokoll (72), wobei dieses Rekonstruktionsmodul (110) ein Untermodul (116) zum Auswählen lediglich der Ereignisse in dem gemeinsamen Ereignisprotokoll (72) aufweist, die einem Identifizierer dieser Betriebsaktivität zugeordnet sind, um sie in das für diese Aktivität rekonstruierte persönliche Ereignisprotokoll aufzunehmen, **dadurch gekennzeichnet, dass** es Folgendes aufweist:
- eine Mehrfachzellen-Datenverarbeitungsplattform (4), wobei das Steuerwerkzeug dazu geeignet ist, Bereiche von Hardware-Datenverarbeitungsbetriebsmitteln zu definieren und diese Bereiche auf der Plattform (4) gleichzeitig oder nacheinander zu aktivieren, wobei jeder Bereich eine oder mehrere Rechenzellen (30, 32, 34, 36) aufweist,
- ein Modul (106) zum Speichern eines Umfangsattributs in dem gemeinsamen Ereignisprotokoll (72), das jedem Ereignis zugeordnet ist und angibt, welche Aktivitäten dieses Ereignis und/oder die Bereiche abfragen dürfen, ausgehend von denen die Aktivitäten dieses Ereignis abfragen dürfen, und das Modul (110) zum Rekonstruieren eines zu einer Aktivität zugehörigen persönlichen Ereignisprotokolls auch ein Untermodul (116) zum Auswählen lediglich der Ereignisse in dem gemeinsamen Ereignisprotokoll (72) aufweist, die einem Umfangsattribut zugeordnet sind, das die Abfrage dieser Ereignisse durch die ausgeführte Aktivität und/oder ausgehend von dem Bereich, in dem die Aktivität ausgeführt wird, gestattet, um sie in das für diese Aktivität rekonstruierte persönliche Ereignisprotokoll aufzunehmen.

5. System nach Anspruch 4, **dadurch gekennzeichnet, dass** aufgrund dessen, dass das zu einer Betriebsaktivität zugehörige persönliche Ereignisprotokoll (72) Ereignisse enthält, die von den Hardware-Datenverarbeitungsbetriebsmitteln des Bereichs, in dem diese Aktivität ausgeführt wird, gespeichert werden, das System auch ein Modul (114) zum Speichern des Ereignisses in das gemeinsame Ereignisprotokoll (72) aufweist, das von einem Hardware-Datenverarbeitungsbetriebsmittel des Bereichs erzeugt wird, der einem Identifizierer dieses Betriebsmittels zugeordnet ist, und das Modul (110) zum Rekonstruieren eines zu einer Aktivität zugehörigen persönlichen Ereignisprotokolls auch ein Untermodul zum Auswählen lediglich der Ereignisse in dem gemeinsamen Ereignisprotokoll (72) aufweist, die einem Identifizierer einer der Hardware-Datenverarbeitungsbetriebsmittel zugeordnet sind, welche in dem Bereich, in dem diese Aktivität ausgeführt wird, enthalten sind, um sie in das für diese Aktivität rekonstruierte persönliche Ereignisprotokoll aufzunehmen.

6. System nach einem der Ansprüche 4 bis 5, **dadurch gekennzeichnet, dass** es auch Folgendes aufweist:
- ein Modul (108) zum Speichern von Befehlen zum Ändern des zu einer Aktivität zugehörigen persönlichen Ereignisprotokolls, wobei dieses Speichermodul (108) dazu geeignet ist, in dem Speicher (64) diese Änderungsbefehle zu speichern, die einem Identifizierer der Aktivität zugeordnet sind, die diese erzeugt hat, und
- ein Modul (118) zum Ausführen der von einer Aktivität in dem Speicher (64) gespeicherten Änderungsbefehle, wobei diese Änderungsbefehle bei dem persönlichen Ereignisprotokoll angewandt werden, das von dem Rekonstruktionsmodul (110) für diese Aktivität rekonstruiert wurde.

7. Speicher (64) zum Speichern von Informationen, der dazu vorgesehen ist, in einem System zur Verwaltung eines persönlichen Ereignisprotokolls nach einem der Ansprüche 4 bis 6 verwendet zu werden, **dadurch gekennzeichnet, dass** er ein gemeinsames Ereignisprotokoll (72) mit einer Liste von Ereignissen aufweist, die von mehreren unterschiedlichen Betriebsaktivitäten gespeichert wurden, wobei jedes dieser Ereignisse einem Identifizierer der Aktivität, die es gespeichert hat, und einem Umfangsattribut zugeordnet ist, das jedem der gespeicherten Ereignisse zugeordnet ist, wobei dieses Umfangsattribut angibt, welche Aktivitäten dieses Ereignis und/oder die Bereiche abfragen dürfen, ausgehend von denen die Aktivitäten dieses Ereignis abfragen dürfen.

8. Speicher (64) zum Speichern von Informationen nach Anspruch 7, **dadurch gekennzeichnet, dass** das gemeinsame Ereignisprotokoll (72) auch eine Liste von Ereignissen enthält, die von Hardware-Datenverarbeitungsbetriebsmitteln gespeichert wurden, die in Bereichen enthalten sind, wobei jedes dieser Ereignisse einem Identifizierer des Hardware-Datenverarbeitungsbetriebsmittels zugeordnet ist, das ihn gespeichert hat.
